# EUROPEAN PATENT APPLICATION

(11) **EP 4 831 821 A1**
(43) Date of publication of application: **28.10.2026**
(21) Application number: 26173889.2
(22) Date of filing: 22.04.2026
(51) Int. Cl.: G06F 13/42

(54) **RELAXED FLUSHER OVER UNORDERED INTERCONNECT**

(30) Priority: 22.04.2025 US 202519185285
(71) Applicant: Mellanox Technologies, Ltd., 2069200 Yokneam (IL)
(72) Inventor: ZIV, Chai, 2069200 Yokneam (IL); KOREN, Ran, 2069200 Yokneam (IL); MARKUS, Ohad, 2069200 Yokneam (IL); NARKIS, Lior, 2069200 Yokneam (IL); SHAHAR, Ariel, 2069200 Yokneam (IL); PANEAH, Peter, 2069200 Yokneam (IL); KADMONY, Uri, 2069200 Yokneam (IL)
(74) Representative: Mathys & Squire

(57) **Abstract**

In one embodiment, a device comprises a network interface to receive a network stream over a network, a data bus interface to share data with a connected device via a data bus, and processing circuitry to send a given relaxed flusher transaction via the data bus to a global visibility point of the connected device in response to receiving at least one first acknowledgment of all previously sent relaxed order transactions being globally observed by consumers, and prior to receiving a second acknowledgement of a previously sent strongly ordered transaction or a given previously sent relaxed flusher transaction being globally observed by the consumers.

## Description

### FIELD OF THE DISCLOSURE

The present disclosure relates to computer systems, and more particularly but not exclusively to transaction ordering.

### BACKGROUND

In traditional PCIe systems, data is posted to a global visibility point via an ordered fabric, ensuring that transactions follow a specific order. When a producer posts data followed by a flag to a global visibility point (e.g., to a device such as a processor or to a memory) over a PCIe interconnect, the system ensures that the flag is only observed by the consumer after the data is globally observed by consumers. This process relies on the PCIe specification's enforcement of transaction ordering, where flags are only visible after the corresponding data is globally visible to consumers.

PCIe uses two primary types of ordering for write transactions: relaxed ordering (RO) and strong ordering (SO). With RO, transactions can be posted without enforcing order, allowing for greater flexibility and parallelism. However, when using SO transactions, any subsequent transaction must wait until all previous transactions are globally visible to consumers, ensuring strict ordering. This approach guarantees data integrity but can introduce inefficiencies when high bandwidths are required.

The use of CHI protocol in a System on Chip (SoC) environment introduces an unordered coherent fabric with full cache coherency. In this case, a coherent requester node (RN-F) interfaces with a network interface controller (NIC) to convert PCIe transactions to CHI protocol, enforcing the PCIe ordering rules across the interconnect. For RO transactions, RN-F sends data directly to memory, while SO transactions require the RN-F to take ownership of the transaction and enforce cache coherency until the transaction is completed in order.

An alternative approach, which was introduced in the PCIe specification revision 6.2, is to use unordered fabrics with unordered input/output (UIO), where transactions can be sent to a global visibility point without waiting for strict ordering guarantees. This allows for higher parallelism and reduced latency. However, UIO introduces a different challenge: the producer must wait for an acknowledgment (ACK) from the global visibility point before posting the flag. This process, known as source ordering, requires the producer to ensure that all data transactions are globally visible to consumers before flagging, and introduces additional latency for flag visibility.

In high-performance computing environments, the balance between maintaining data integrity and achieving high bandwidth with low latency remains an ongoing area of research and development. As systems continue to evolve, new approaches to transaction ordering and data visibility are being explored to meet the increasing demands of modern applications and workloads.

### OVERVIEW

The invention is defined by the claims. In order to illustrate the invention, aspects and embodiments which may or may not fall within the scope of the claims are described herein.

There is provided in accordance with an embodiment of the present disclosure, a device, comprising a network interface to receive a network stream over a network, a data bus interface to share data with a connected device via a data bus, and processing circuitry to send a given relaxed flusher transaction via the data bus to a global visibility point of the connected device in response to receiving at least one first acknowledgment of all previously sent relaxed order transactions being globally observed by consumers, and prior to receiving a second acknowledgement of a previously sent strongly ordered transaction or a given previously sent relaxed flusher transaction being globally observed by the consumers.

Further in accordance with an embodiment of the present disclosure, the processing circuitry is to wait, prior to sending the given relaxed flusher transaction to the global visibility point of the connected device via the data bus, for the at least one first acknowledgment.

Still further in accordance with an embodiment of the present disclosure, the device further comprising a network interface controller, which includes packet processing circuitry comprising the processing circuitry.

Additionally in accordance with an embodiment of the present disclosure, the processing circuitry is to send the given relaxed flusher transaction, the previously sent relaxed order transactions, and the previously sent strongly order transaction using an unordered input-output protocol.

Moreover, in accordance with an embodiment of the present disclosure, the processing circuitry is to send the given relaxed flusher transaction via the data bus to the global visibility point prior to receiving the second acknowledgement of the previously sent strongly ordered transaction being globally observed by the consumers.

Further in accordance with an embodiment of the present disclosure, the processing circuitry is to send the given relaxed flusher transaction via the data bus to the global visibility point prior to receiving the second acknowledgement of the given previously sent relaxed flusher transaction being globally observed by the consumers.

Still further in accordance with an embodiment of the present disclosure, the processing circuitry is to wait, prior to sending the given relaxed flusher transaction to the global visibility point at a given memory address, for a third acknowledgment of another relaxed flusher transaction being globally observed by the consumers also at the given memory address, and send the given relaxed flusher transaction via the data bus to the global visibility point in response to receiving the third acknowledgment.

Additionally in accordance with an embodiment of the present disclosure, the processing circuitry is to send a relaxed order transaction via the data bus to the global visibility point while any previously sent transaction has still not been globally observed by the consumers.

Moreover in accordance with an embodiment of the present disclosure, the processing circuitry is to wait, prior to sending a strongly ordered transaction to the global visibility point, for at least one acknowledgment of all previously sent transactions being globally observed by the consumers, and send the strongly ordered transaction via the data bus to the global visibility point in response to receiving the at least one acknowledgment of all the previously sent transactions being globally observed by the consumers.

Further in accordance with an embodiment of the present disclosure, the previously sent relaxed order transactions include data, and the given relaxed flusher transaction includes a flag or completion notification, and the previously sent strongly ordered transaction includes a flag or a completion notification.

Still further in accordance with an embodiment of the present disclosure, the processing circuitry is to send multiple relaxed flusher transactions including corresponding completion notifications via the data bus to the global visibility point in geographical order but not chronological order.

Additionally in accordance with an embodiment of the present disclosure, the processing circuitry is to operate according to a hierarchy of relaxed flusher levels, wait, prior to sending the given relaxed flusher transaction to the global visibility point, for at least one third acknowledgment of being globally observed by the consumers of all previously sent relaxed flusher transactions having a lower relaxed flusher level than a relaxed flusher level of the given relaxed flusher transaction, or another previously sent relaxed flusher transaction having a same relaxed flusher level as the flusher level of the given relaxed flusher transaction and being sent to a same memory address as the given relaxed flusher transaction, and send the given relaxed flusher transaction via the data bus to the global visibility point in response to receiving the at least one third acknowledgement.

Moreover in accordance with an embodiment of the present disclosure, the given previously sent relaxed flusher transaction has the same relaxed flusher level as, or a higher relaxed flusher level than, the relaxed flusher level of the given relaxed flusher transaction, and the processing circuitry is to send the given relaxed flusher transaction via the data bus to the global visibility point prior to receiving the second acknowledgement of the given previously sent relaxed flusher transaction being globally observed by the consumers.

Further in accordance with an embodiment of the present disclosure, the given previously sent relaxed flusher transaction has the same relaxed flusher level as the given relaxed flusher transaction, the given previously sent relaxed flusher transaction and the given relaxed flusher transaction are being sent to different memory addresses in the global visibility point, and the processing circuitry is to send the given relaxed flusher transaction via the data bus to the global visibility point prior to receiving the second acknowledgement of the given previously sent relaxed flusher transaction being globally observed by the consumers.

Still further in accordance with an embodiment of the present disclosure, the hierarchy of relaxed flusher levels corresponds to a hierarchy of a different completion notification types.

There is provided in accordance with another embodiment of the present disclosure, a device, comprising a data bus interface to share data via a data bus with a connected device, and processing circuitry to send transactions to a global visibility point of the connected device via the data bus, each transaction having a transaction type selected from one of the following: a relaxed order transaction type, a relaxed flusher transaction type, or a strongly ordered transaction type, send a given relaxed order transaction via the data bus to the global visibility point irrespective of a transaction type of a previously sent transaction that has not yet been globally observed by consumers, and send a given relaxed flusher transaction via the data bus to the global visibility point in response to no previously sent relaxed order transaction awaiting to be globally observed by the consumers, and irrespective of a previously sent relaxed flusher transaction awaiting to be globally observed by the consumers and sent to a different memory address than the given relaxed flusher transaction.

Further in accordance with an embodiment of the present disclosure, the processing circuitry is to send a given strongly ordered transaction via the data bus to the global visibility point in response to no previously sent transaction awaiting to be globally observed by the consumers, and send the given relaxed flusher transaction via the data bus to the global visibility point irrespective of a previously sent strongly ordered transaction awaiting to be globally observed by the consumers.

Still further in accordance with an embodiment of the present disclosure, the processing circuitry is to operate according to a hierarchy of relaxed flusher levels, and send the given relaxed flusher transaction via the data bus to the global visibility point irrespective of the previously sent relaxed flusher transaction awaiting to be globally observed by the consumers and having a same relaxed flusher level as, or a higher relaxed flusher level than, the given relaxed flusher transaction.

Additionally in accordance with an embodiment of the present disclosure, the processing circuitry is to send the given relaxed flusher transaction via the data bus to the global visibility point in response to no previously sent lower-level relaxed flusher transaction awaiting to be globally observed by the consumers, and having a lower relaxed flusher level than the given relaxed flusher transaction.

There is also provided in accordance with still another embodiment of the present disclosure, a method, comprising receiving a network stream over a network, and sending a given relaxed flusher transaction via a data bus to a global visibility point of a connected device in response to receiving at least one first acknowledgment of all previously sent relaxed order transactions being globally observed by consumers, and prior to receiving a second acknowledgement of a previously sent strongly ordered transaction or a given previously sent relaxed flusher transaction being globally observed by the consumers.

There is also provided in accordance with still another embodiment of the present disclosure, a method, comprising sending transactions to a global visibility point of a connected device via a data bus, each transaction having a transaction type selected from one of the following: a relaxed order transaction type, a relaxed flusher transaction type, or a strongly ordered transaction type, sending a given relaxed order transaction via the data bus to the global visibility point irrespective of a transaction type of a previously sent transaction that has not yet been globally observed by consumers, and sending a given relaxed flusher transaction via the data bus to the global visibility point in response to no previously sent relaxed order transaction awaiting to be globally observed by the consumers, and irrespective of a previously sent relaxed flusher transaction awaiting to be globally observed by the consumers and sent to a different memory address than the given relaxed flusher transaction.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

The present disclosure will be understood from the following detailed description, taken in conjunction with the drawings in which:
Fig. 1 is a simplified block diagram of a system constructed and operative in accordance with an embodiment of the present disclosure;
Fig. 2 is a detailed sequence diagram illustrating transaction flows in the system of Fig. 1;
Fig. 3 is a transaction ordering rule table for use in the system of Fig. 1;
Fig. 4 is a flowchart including steps in a method of operation of the system of Fig. 1; and
Fig. 5 is a block diagram that schematically illustrates a computing system, e.g., a data center or a High-Performance Computing (HPC) cluster, in accordance with an embodiment of the present disclosure.

### DESCRIPTION OF EXAMPLE EMBODIMENTS

### DEFINITIONS

As used herein, the term "producer" may refer to a component or entity in a computing system that generates or sends data, transactions, or other information to be processed or consumed by other parts of the system.

As used herein, the term "consumer" may refer to a component or entity in a computing system that receives, processes, or utilizes data, transactions, or other information generated by a producer.

As used herein, the term "network stream" may refer to a sequence of related data packets or transactions that are transmitted over a network, typically associated with a particular communication session or data flow between network endpoints.

As used herein, the term "global visibility point" may refer to a location or state in a system where data or transactions become visible or accessible to all relevant components or consumers within the system.

As used herein, the term "globally visible to consumers" may refer to the state or condition where data or transactions have reached a point in the system where they can be observed or accessed by all relevant consumers or components that may need to process or utilize that information.

### OVERVIEW OF EXAMPLE EMBODIMENTS

As previously mentioned, traditional PCIe systems enforce strict transaction ordering, which can limit scalability and efficiency, particularly in high-bandwidth scenarios. This strict ordering ensures data integrity but introduces inefficiencies when high bandwidths are required. In unordered I/O (UIO) systems, the producer must wait for acknowledgments (ACKs) before sending a flag, introducing latency that prevents the system from efficiently sending subsequent data. This process, known as source ordering, requires the producer to ensure that all data transactions are globally visible to consumers before flagging, which can significantly impact system performance in high-throughput environments.

A potential solution is to send flags as relaxed order (RO) transactions after data is globally visible to consumers. However, this approach introduces a new challenge: sequential sending of flags reduces bandwidth. The problem is to mitigate the latency and bandwidth limitations caused by waiting for ACKs and sequential flag sending in high-performance systems while maintaining data integrity and consistency.

Embodiments of the present disclosure address at least some of the above drawbacks by providing a system and method that introduces a new UIO transaction called a relaxed flusher transaction. This new transaction type can be used with both relaxed order and strongly ordered transactions, providing an intermediate level of ordering flexibility. This allows for more efficient transaction processing while maintaining necessary ordering constraints.

In some embodiments, a relaxed flusher transaction can pass a strongly ordered transaction and another relaxed flusher (assuming they have different memory addresses), but not a relaxed order transaction. In some cases, the different memory address restriction may be dropped.

As used herein, the term "pass" may refer to the ability of one transaction to be processed and become globally visible to consumers before another transaction that was initiated earlier in the sequence. When a transaction "passes" another transaction, it may reach the global visibility point and become observable by consumers ahead of the transaction it has passed, potentially altering the original order of operations. This passing behavior may allow for more flexible and efficient processing of transactions in systems with unordered input/output, while still maintaining certain ordering constraints to ensure data consistency and integrity.

In some cases, the system may operate according to a hierarchy of relaxed flusher levels, providing more granular control over transaction ordering. The rules for relaxed flusher transactions may vary depending on their relative levels. A relaxed flusher transaction may not pass a lower-level relaxed flusher transaction, a same level relaxed flusher transaction of the same memory address (in some cases), and a relaxed order transaction. A relaxed flusher transaction may pass a higher level relaxed flusher transaction, a same level relaxed flusher transaction of a different memory address, and a strongly ordered transaction. This hierarchical structure allows for fine-tuned control over transaction ordering, enabling optimized handling of various transaction types and completion notifications. The system may adjust the passing rules based on the relative levels of relaxed flusher transactions, potentially improving overall system performance and efficiency.

The advantages of this solution include reduced latency, improved bandwidth utilization, and enhanced flexibility in transaction ordering. By allowing certain transactions to bypass others under specific conditions, the system can achieve higher throughput while still maintaining data consistency and integrity.

### SYSTEM DESCRIPTION

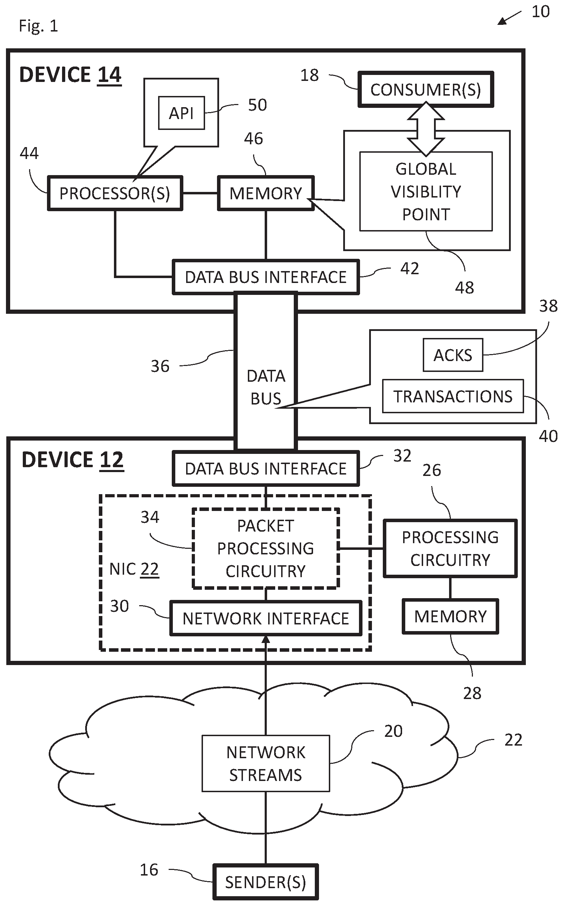

Reference is now made to Fig. 1, which is a block diagram illustrating a system 10 for managing transaction ordering in network communications. The system 10 may include a network device 12 and a connected device 14. In some cases, the network device 12 may be a peripheral device, while the connected device 14 may be a host device or a peer device.

The system 10 may enable communication between sender(s) 16 and consumer(s) 18 through network streams 20 (or any suitable data stream). The network device 12 may include a network interface 30 (or any suitable connection) configured to receive the network streams 20 over network 22 from the sender(s) 16.

In some cases, the network device 12 may include a network interface controller 22. The network interface controller 22 may comprise packet processing circuitry 34 and the network interface 30. The packet processing circuitry 34 may be configured to process packets of the network streams 20.

The network device 12 may also include processing circuitry 26, memory 28, and a data bus interface 32. The data bus interface 32 may be configured to share data with the connected device 14 via a data bus 36. In some embodiments, the processing circuitry may be included in the packet processing circuitry 34.

In operation, the network device 12 may receive network streams 20 from the sender(s) 16 through the network interface 30. The network device 12 as a producer may process these network streams 20, generate transactions 40, and send the transactions 40 through the data bus 36 to a global visibility point 48 in the connected device 14 for global visibility by the consumer(s) 18. The transaction may be generated by the processing circuitry based on the network streams 20.

In some cases, each transaction 40 may have a transaction type selected from: a relaxed order transaction type, a relaxed flusher transaction type, or a strongly ordered transaction type. The processing circuitry 26 may be configured to send a given relaxed flusher transaction via the data bus 36 to the global visibility point 48 of the connected device 14.

The connected device 14 may include a data bus interface 42, processor(s) 44, and memory 46. The global visibility point 48 in the connected device 14 may be a location where transactions can be observed by the consumer(s) 18. Fig. 1 shows global visibility point 48 in memory 46. In some embodiments, global visibility point 48 may be disposed in any suitable location such as in processor(s) 44.

The data bus interface of connected device 14 is configured to generate acknowledgments 38 to the transactions 40 and send the acknowledgments 38 to network device 12 via the data bus 36. The acknowledgments 38 may be used to confirm the global visibility of transactions 40 by the consumer(s) 18.

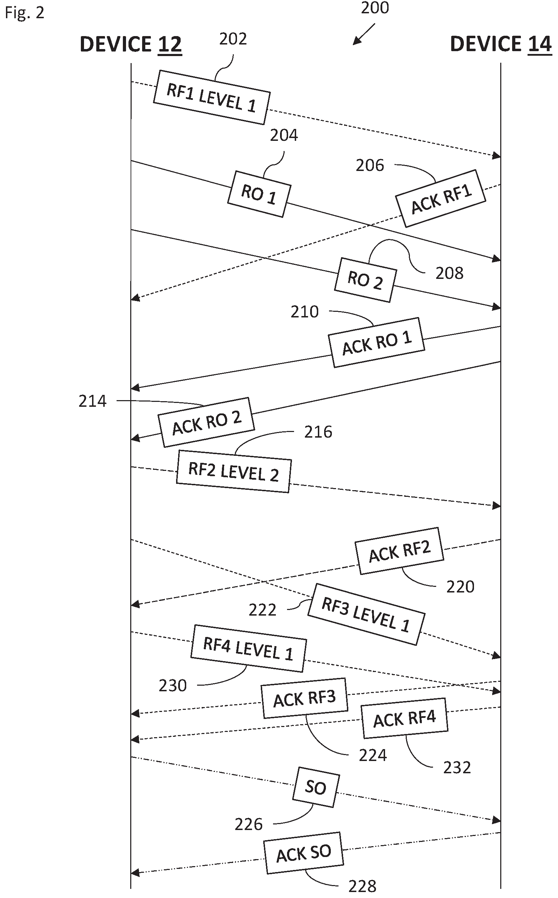

Reference is now made to Fig. 2, which is a sequence diagram 200 illustrating example transaction flows and acknowledgments between network device 12 and connected device 14. The sequence diagram 200 demonstrates the ordering and management of different transaction types to maintain data integrity while improving efficiency.

In some cases, the processing circuitry 26 may send a level 1 (first) relaxed flusher transaction 202 to the connected device 14. Following this, the processing circuitry 26 may send a first relaxed order transaction 204. The connected device 14 may then respond with a first acknowledgment 206 to level 1 (first) relaxed flusher transaction 202.

The processing circuitry 26 may continue by sending a second relaxed order transaction 208. In some cases, the connected device 14 may send an acknowledgment 210 to first relaxed order transaction 204 and an acknowledgment 214 to second relaxed order transaction 208. This sequence illustrates that the processing circuitry 26 may send a relaxed order transaction (which may include a data transaction) via the data bus 36 to a global visibility point 48, without waiting for acknowledgments of previously sent transactions including relaxed flusher transactions.

In some cases, the processing circuitry 26 may send a level 2 (second) relaxed flusher transaction 216. The connected device 14 may respond with an acknowledgment 220 to the level 2 (second) relaxed flusher transaction 216. Subsequently, the processing circuitry 26 may send a level 1 (third) relaxed flusher transaction 222, and the connected device 14 may respond with an acknowledgment 224 to the level 1 (third) relaxed flusher transaction 222. The above illustrates that all previously sent relaxed order transactions are acknowledged prior to sending any relaxed flusher transaction.

The sequence diagram 200 shows that the processing circuitry 26 may send a given relaxed flusher transaction (e.g., the level 1 third relaxed flusher transaction 222) prior to receiving acknowledgment 220 of the previously sent relaxed flusher transaction (e.g., the acknowledgment 220 to level 2 second relaxed flusher transaction 216). This may occur when the subsequent relaxed flusher transaction is at a lower level than the previous relaxed flusher transaction(s) and/or when the previous relaxed flusher transaction(s) is(are) sent to different memory addresses. The sequence diagram 200 also shows that the processing circuitry 26 may send another relaxed flusher transaction 230 (e.g., another level 1 fourth flusher transaction RF4) prior to receiving acknowledgment 224 to the level 1 (third) relaxed flusher transaction 222. In other words, two relaxed flushers on the same level may be sent without waiting (subject to same memory address requirements in some cases). The acknowledgment to relaxed flusher transaction 230 is acknowledgment 232. The relaxed flusher transactions may include flags or completion notifications.

In some cases, the processing circuitry 26 may send a strongly ordered transaction 226. The connected device 14 may respond with an acknowledgment to strongly ordered transaction 228. The strongly ordered transaction 226 may include a flag or a completion notification. Fig. 2 shows that the strongly ordered transaction 228 is sent after receiving acknowledgements of all pending transactions.

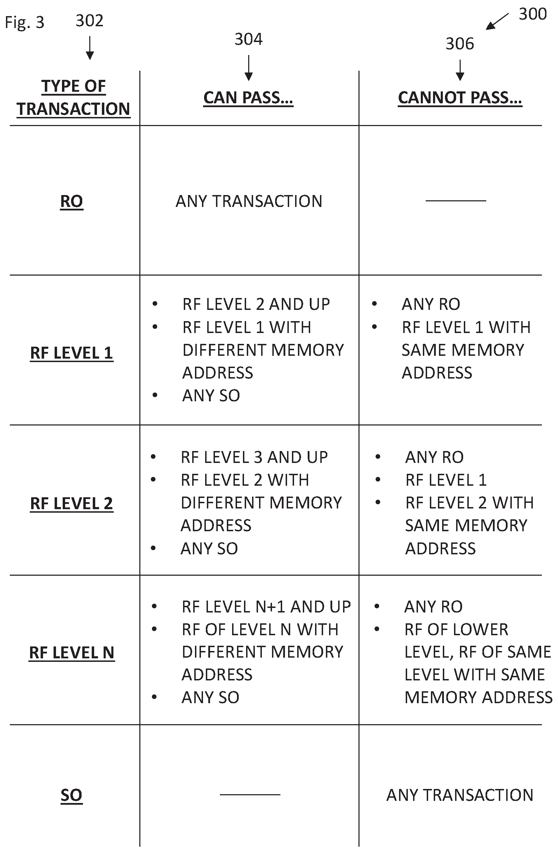

The sequence diagram 200 illustrates that the processing circuitry 26 may send relaxed flusher transactions, relaxed order transactions, and strongly ordered transactions using an unordered input-output protocol according to ordering rules described in more detail with reference to Fig. 3.

In some cases, the processing circuitry 26 may send a relaxed order transaction via the data bus 36 to the global visibility point 48 irrespective of a transaction type of a previously sent transaction that has not yet been globally observed by consumers 18.

The processing circuitry 26 may wait, prior to sending a relaxed flusher transaction to the global visibility point 48 of the connected device 14 via the data bus 36, for acknowledgment(s) of all previously sent relaxed order transactions being globally observed by consumers 18, or acknowledgment(s) of a previously sent relaxed flusher transaction with a lower level, or the same level and the same memory address. The processing circuitry 26 may be configured to send a relaxed flusher transaction to the global visibility point 48 of the connected device 14 via the data bus 36, in response to receiving acknowledgment(s) of all previously sent relaxed order transactions being globally observed by consumers 18, and/or acknowledgment(s) of a previously sent relaxed flusher transaction with a lower level, or the same level and the same memory address. In some embodiments, the processing circuitry 26 may be configured to send a given relaxed flusher transaction via the data bus 36 to the global visibility point 48 in response to no previously sent lower-level relaxed flusher transaction awaiting to be globally observed by the consumers 18, and having a lower relaxed flusher level than the given relaxed flusher transaction, and/or in response to no previously sent same-level relaxed order transaction awaiting to be globally observed by consumers 18 at the same memory address.

In some cases, the processing circuitry 26 may send a relaxed flusher transaction via the data bus 36 to a global visibility point 48 prior to receiving acknowledgement of a previously sent strongly ordered transaction or a previously sent relaxed flusher transaction (e.g., of a higher level or of the same level and a different memory address) being globally observed by the consumers 18.

In some cases, the processing circuitry 26 may send completion queue entries (CQEs) as relaxed flusher transactions that flush all relaxed ordered writes before them. The processing circuitry 26 may also send event queue entries (EQEs) as a higher level relaxed flusher transactions (higher than the level of the CQEs) that flush all CQEs and data before them. Additionally, the processing circuitry 26 may send MSI-X interrupts as strongly ordered transactions that push everything before them.

In some cases, the processing circuitry 26 may send a given strongly ordered transaction via the data bus 36 to the global visibility point 48 in response to no previously sent transaction awaiting to be globally observed by the consumers 18. The processing circuitry 26 may also send a given relaxed flusher transaction via the data bus 36 to the global visibility point 48 irrespective of a previously sent strongly ordered transaction awaiting to be globally observed by the consumers 18.

The sequence diagram 200 demonstrates that the processing circuitry 26 may manage different transaction types (relaxed order, relaxed flusher, and strongly ordered) to maintain data integrity while improving efficiency in high-performance systems.

Reference is now made to Fig. 3, which is a transaction ordering rule table 300 illustrating the relationships between different types of transactions and their passing rules. The transaction ordering rule table 300 includes a transaction type column 302, a transactions that "can be passed" column 304, and a transactions that cannot be passed column 306.

The transaction ordering rule table 300 defines the ordering rules for different transaction types, including Relaxed Order (RO), Relaxed Flusher (RF) of various levels, and Strongly Ordered (SO) transactions. These rules govern how transactions may be sent and processed by the processing circuitry 26.

For RO transactions, the transactions that "can be passed" column 304 indicates that any transaction can be passed by an RO transaction. This means that the processing circuitry 26 may send a relaxed order transaction via the data bus 36 to the global visibility point 48 while any previously sent transaction has still not been globally observed by the consumers 18.

RF transactions are organized in a hierarchy of levels, for example RF LEVEL 1, RF LEVEL 2, RF LEVEL N, and so on. The processing circuitry 26 may operate according to this hierarchy of relaxed flusher levels. For each RF level, the rules specify which transactions can be passed and which cannot.

For RF LEVEL 1 transactions, the transactions that "can be passed" column 304 shows that an RF LEVEL 1 transaction can pass RF LEVEL 2 transactions and up, an RF LEVEL 1 transaction with a different memory address, and any SO transaction. The transactions that cannot be passed column 306 indicates that an RF LEVEL 1 transaction cannot pass any RO, or an RF LEVEL 1 transaction with the same memory address.

Therefore, the processing circuitry 26 may be configured to wait, prior to sending a relaxed flusher transaction to the global visibility point 48 at a memory address, for acknowledgment of another relaxed flusher transaction being globally observed by the consumers 18 also at the same memory address. The processing circuitry 26 may then send the relaxed flusher transaction via the data bus 36 to the global visibility point 48 in response to receiving that acknowledgment.

For RF LEVEL 2 and higher levels, similar rules apply with additional restrictions. The processing circuitry 26 may wait, prior to sending a given relaxed flusher transaction to the global visibility point 48, for acknowledgment(s) of being globally observed by the consumers 18 of: all previously sent relaxed flusher transactions having a lower relaxed flusher level than the relaxed flusher level of the given relaxed flusher transaction; or another previously sent relaxed flusher transaction having a same relaxed flusher level as the flusher level of the given relaxed flusher transaction and being sent to the same memory address as the given relaxed flusher transaction.

In some cases, the processing circuitry 26 may send the given relaxed flusher transaction via the data bus 36 to the global visibility point 48 irrespective of a previously sent relaxed flusher transaction awaiting to be globally observed by the consumers 18 and having a same relaxed flusher level as, or a higher relaxed flusher level than, the given relaxed flusher transaction. In some cases, this may occur when the given previously sent relaxed flusher transaction and the given relaxed flusher transaction are being sent to different memory addresses in the global visibility point 48.

As relaxed flushers of the same level may bypass each other (and subject to same memory ordering criteria in some cases), it follows that the processing circuitry 26 may send multiple relaxed flusher transactions including corresponding completion notifications via the data bus 36 to the global visibility point 48 in geographical order but not chronological order. This allows for efficient processing of transactions while maintaining the necessary ordering rules.

For SO transactions, the transactions that cannot be passed column 306 shows that they cannot pass any transaction. The processing circuitry 26 may wait, prior to sending a strongly ordered transaction to the global visibility point 48, for acknowledgment(s) of all previously sent transactions being globally observed by the consumers 18. The processing circuitry 26 may then send the strongly ordered transaction via the data bus 36 to the global visibility point 48 in response to receiving the acknowledgment(s) of all the previously sent transactions being globally observed by the consumers 18.

These transaction ordering rules enable efficient and flexible processing of different transaction types while maintaining necessary ordering constraints and ensuring proper visibility to consumers 18.

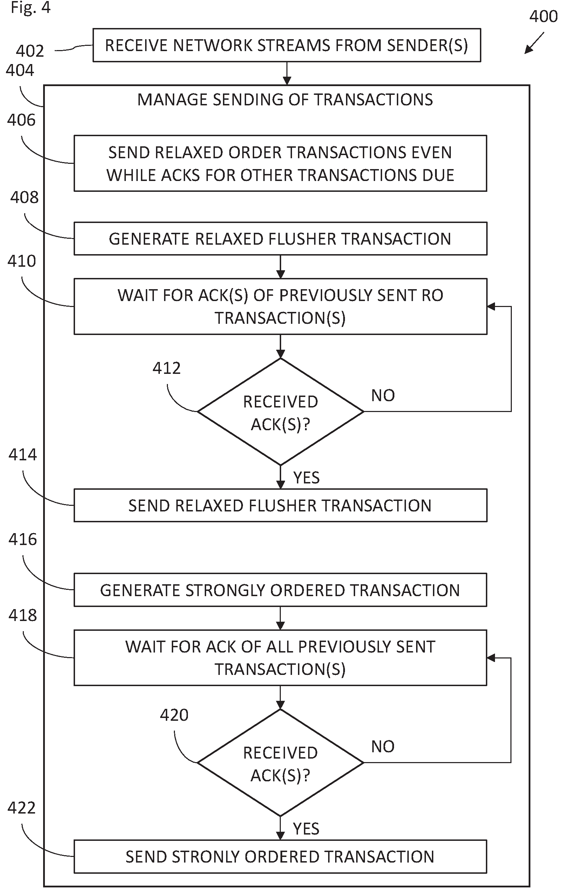

Reference is now made to Fig. 4, which is a flowchart illustrating a method 400 for managing transaction sending in system 10 of Fig. 1. The method 400 includes various steps for handling different transaction types and their acknowledgments.

A step 402 involves receiving network streams from sender(s). Following this, a step 404 manages sending of transactions based on the received network streams. In a step 406, the method 400 sends relaxed order transactions even while acknowledgments (ACKs) for other transaction types are due.

At step 408, a relaxed flusher transaction is generated. In a step 410, the method 400 waits for ACK(s) previously sent RO transaction(s). A decision step 412 determines whether the ACK(s) of previously sent RO transaction(s) have been received. If ACK(s) have not yet been received, the method 400 returns to step 410 to continue waiting. If the outstanding ACK(s) have all been received, the method 400 advances to a step 414, where the relaxed flusher transaction is sent.

In an optional step 416, the method 400 generates a strongly ordered transaction. A step 418 involves waiting for ACK(s) of all previously sent transaction(s). The method 400 then moves to a decision step 420, where it determines whether ACK(s) for all previously sent transaction(s) have been received. If all the outstanding ACK(s) have not yet been received, the method 400 returns to step 418 to continue waiting. If all the outstanding ACK(s) have been received, the method 400 proceeds to a step 422, where the strongly ordered transaction is sent.

In some cases, the processing circuitry may operate according to a hierarchy of relaxed flusher levels. This hierarchy may correspond to a hierarchy of different completion notification types. For example, the hierarchy may include data event queue entries, completion queue entries, and MSIX (Message Signaled Interrupts Extended).

The method 400 may ensure that transactions are sent in an order that maintains data consistency while optimizing performance. By allowing relaxed order transactions to be sent without waiting for acknowledgments of some other transactions, and by implementing a hierarchy of relaxed flusher levels, the method 400 may provide flexibility in transaction ordering while still maintaining necessary ordering constraints for different types of transactions and completion notifications.

In some implementations, the ordering rules for specific use cases may be modified. For example, in a high-throughput scenario, relaxed flusher transactions may be allowed to pass other relaxed flusher transactions of the same level, even if they are being sent to the same memory address. This modification may increase overall system performance in certain situations.

The system may also support dynamic adjustment of transaction ordering rules based on runtime conditions. For instance, the rules may be automatically adjusted based on network congestion, processing load, or other performance metrics.

In some cases, the system may implement a hybrid approach where certain streams or types of data use the described relaxed flusher mechanism, while others use traditional strongly ordered transactions. This hybrid approach may be beneficial in systems with diverse performance requirements for different data types.

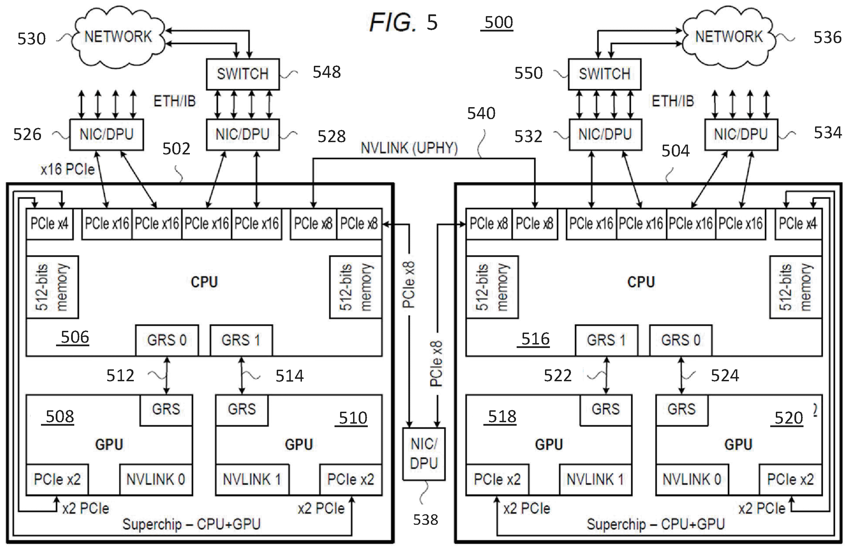

Reference is now made to Fig. 5, which is a block diagram that schematically illustrates a computing system 500, e.g., a data center or a High-Performance Computing (HPC) cluster, in accordance with an embodiment of the present disclosure.

System 500 comprises a plurality of subsystems, e.g., multiple processing devices coupled to each other, multiple network devices, and multiple networks, according to at least one embodiment. Computing system 500 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 500 and to one or more external networks 530, 536. In the present example, system 500 comprises a packet switch 548 that connects NIC/DPU 528 to network 530, and a packet switch 550 that connects NIC/DPU 532 to network 536.

The coupling of processing devices through NVLink allows for seamless data exchange and parallel processing, enhancing overall computational performance. The processing devices are connected to multiple networks through one or more network interface cards (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 500 can include one or more CPUs and one or more GPUs.

Fig. 5 also demonstrates an example architecture of a multi-GPU architecture. As illustrated in the figure, computing system 500 includes a processing device 502 with a multi-GPU architecture. In particular, processing device 502 may be a system-on-chip and includes multiple subsystems such as a CPU 506, a GPU 508, and a GPU 510. CPU 506 can be coupled to GPU 508 via a die-to-die (D2D) or chip-to-chip (C2C) interconnect 512, such as a Ground-Referenced Signaling interconnect (GRS interconnect). CPU 506 can be coupled to GPU 510 via a D2D or C2C interconnect 514. CPU 506 can also couple to GPU 508 and GPU 510 via PCIe interconnects.

CPU 506 can be coupled to one or more NICs or DPUs, which are coupled to one or more networks. For example, as illustrated in Fig. 5, CPU 506 is coupled to a first NIC/DPU 526, which is coupled to a network 530. CPU 506 is also coupled to a second NIC/DPU 528, which is coupled to network 530 via switch 548. NIC/DPU 526 and NIC/DPU 528 can be coupled to network 530 over Ethernet (ETH), NVLINK or InfiniBand (IB) connections, for example.

Computing system 500 also includes a processing device 504 with a multi-GPU architecture. In particular, processing device 504 includes multiple subsystems including a CPU 516, a GPU 518, and a GPU 520. CPU 516 can be coupled to GPU 518 via a D2D or C2C interconnect 522. CPU 516 can be coupled to GPU 520 via a D2D or C2C interconnect 524. CPU 516 can also couple to GPU 518 and GPU 520 via PCIe interconnects. CPU 516 can be coupled to one or more NICs or DPUs, which are coupled to one or more networks. For example, as illustrated in Fig. 5, CPU 516 is coupled to a first NIC/DPU 532, which is coupled to a network 536. CPU 516 is also coupled to a second NIC/DPU 534, which is coupled to network 536 via switch 550. NIC/DPU 532 and NIC/DPU 534 can be coupled to network 536 over Ethernet (ETH), NVLINK or InfiniBand (IB) connections.

In at least one embodiment, processing device 502 and processing device 504 can communicate with each other via a NIC/DPU 538, such as over PCIe interconnects. Processing device 502 and processing device 504 can also communicate with each other over a high-bandwidth communication interconnect 540, such as an NVLink interconnect or other high-speed interconnects. The packet switches in Fig. 5 may comprise, for example, Nvidia Quantum-2 switches. The NICs/DPUs in the figure may comprise, for example, Nvidia Bluefield DPUs.

The devices may be any suitable devices, such as: an accelerator device; a processing device including a central processing unit (CPU) and/or a graphics processing unit (GPU); a host device connected to one or more peripheral devices; a peripheral device connected to another peripheral device and/or one or more host devices; a network device, e.g., a network interface controller (NIC) device, a data processing unit (DPU) or smart NIC including a NIC and one or more processing cores, or a network switch. One or more of the processing steps described herein may be performed by a CPU, GPU, DPU, NIC, or any suitable combination thereof.

The NIC may include any of the following: an Ethernet Port (RJ45 Connector), which is the physical interface where the network cable (usually an Ethernet cable) connects to the NIC and is used for wired network connections; packet processing hardware or circuitry, which is responsible for handling network communication and processes incoming and outgoing data packets and manages the network interface functions; a memory (such as RAM or ROM) to store temporary data, such as network packet buffers, configuration settings, and firmware, and helps in speeding up data transfer and processing; firmware, which is software programmed into the NIC's memory and controls the hardware operations and may perform firmware updates to improve performance or add new features to the NIC; LED Indicators that provide visual indicators of network status, common indicators including power status, network activity, and link speed; a bus Interface (e.g., PCI or PCIe) to connect the NIC to the host computer's motherboard; a processor to handle network processing tasks as well as other processing tasks to offload work from the main CPU of the host device and improve network performance; a heat sink or cooling mechanism (e.g., for high-performance NICs), especially those used in servers, to prevent overheating; power management circuitry to ensure the NIC receives the correct amount of power and manages power consumption efficiently; and/or connector pins and circuitry including internal connections and pathways that route signals between the NIC's components.

The packet processing hardware or circuitry is the central component of the NIC and handles network communications. It may include several key components that work together to manage and process network data, such as any one or more of the following: MAC (Media Access Control) Layer, which is responsible for handling the data link layer of the OSI model and manages how data packets are formatted, addressed, and transmitted over the network; MAC address register, which stores the unique hardware address (MAC address) of the NIC; a frame buffer that temporarily holds data frames as they are being processed; a PHY (Physical Layer) Interface that interfaces with the physical medium (such as Ethernet cables) and is responsible for the actual transmission and reception of data bits over the network; a transceiver that converts data between the digital signals used by the MAC layer and the analog signals used for transmission over the network medium; DMA (Direct Memory Access) Controller that manages data transfers between the NIC and the computer's memory without involving the CPU and helps to offload processing tasks from the CPU and improve data transfer efficiency; a packet Processing Engine that handles the encapsulation and decapsulation of network packets, and processes incoming and outgoing packets, managing tasks like error checking and packet filtering; buffer management, which includes memory areas for storing packets temporarily, such as transmit buffers to store packets that are being sent from the computer to the network, receive buffers to store packets received from the network before they are processed by the system; an interrupt controller that manages and generates interrupts to notify the CPU of events such as packet reception or transmission completion and helps in efficient handling of network events; a clock generator, which provides timing signals for the various components of the NIC to synchronize their operations; a power management unit to regulate power consumption and manages power-saving features of the NIC chip to improve energy efficiency; error handling and correction logic, which detects and corrects errors in data transmission and reception, and may include features for error-checking protocols like CRC (Cyclic Redundancy Check); configuration registers that store configuration settings and parameters that control the NIC's operation, such as speed settings, interrupt configurations, and buffer sizes; firmware/ROM that contains the embedded software that controls the NIC's operations and manages network protocols.

The network switch may include any of the following: ports where network cables connect; switching fabric that manages data transfer between ports; a MAC address table that stores device addresses and port information; a forwarding engine that directs data packets to the correct ports; buffer memory that temporarily holds data to manage traffic; a management processor that handles configuration and monitoring in managed switches; a power supply that provides electrical power; a cooling system that keeps the switch from overheating; firmware that controls the switch; LED Indicators that show status and activity; and networking modules (in modular switches) that allow for additional ports or features.

In practice, some or all of these functions may be combined in a single physical component or, alternatively, implemented using multiple physical components. These physical components may comprise hard-wired or programmable devices, or a combination of the two. In some embodiments, at least some of the functions of the processing circuitry may be carried out by a programmable processor under the control of suitable software. This software may be downloaded to a device in electronic form, over a network, for example. Alternatively, or additionally, the software may be stored in tangible, non-transitory computer-readable storage media, such as optical, magnetic, or electronic memory.

The flowchart and block diagrams in the figures illustrate the architecture, functionality, and operation of possible implementations of systems, methods and computer program products according to various examples of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. The descriptions of the various examples of the present disclosure have been presented for purposes of illustration, but are not intended to be exhaustive or limited to the examples disclosed. Many modifications and variations will be apparent to those of ordinary skill in the art without departing from the scope and spirit of the described examples.

As used herein, the singular form "a", "an" and "the" include plural references unless the context clearly dictates otherwise.

Various features of the disclosure which are, for clarity, described in the contexts of separate embodiments may also be provided in combination in a single embodiment. Conversely, various features of the disclosure which are, for brevity, described in the context of a single embodiment may also be provided separately or in any suitable sub-combination.

The embodiments described above are cited by way of example, and the present disclosure is not limited by what has been particularly shown and described hereinabove. Rather the scope of the disclosure includes both combinations and subcombinations of the various features described hereinabove, as well as variations and modifications thereof which would occur to persons skilled in the art upon reading the foregoing description and which are not disclosed in the prior art.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A device, comprising:
   a network interface to receive a network stream over a network;
   a data bus interface to share data with a connected device via a data bus; and
   processing circuitry to send a given relaxed flusher transaction via the data bus to a global visibility point of the connected device in response to:
      receiving at least one first acknowledgment of all previously sent relaxed order transactions being globally observed by consumers; and
      prior to receiving a second acknowledgement of a previously sent strongly ordered transaction or a given previously sent relaxed flusher transaction being globally observed by the consumers.
Clause 2. The device according to clause 1, wherein the processing circuitry is to wait, prior to sending the given relaxed flusher transaction to the global visibility point of the connected device via the data bus, for the at least one first acknowledgment.
Clause 3. The device according to clause 1, further comprising a network interface controller, which includes packet processing circuitry comprising the processing circuitry.
Clause 4. The device according to clause 1, wherein the processing circuitry is to send the given relaxed flusher transaction, the previously sent relaxed order transactions, and the previously sent strongly order transaction using an unordered input-output protocol.
Clause 5. The device according to clause 1, wherein the processing circuitry is to send the given relaxed flusher transaction via the data bus to the global visibility point prior to receiving the second acknowledgement of the previously sent strongly ordered transaction being globally observed by the consumers.
Clause 6. The device according to clause 1, wherein the processing circuitry is to send the given relaxed flusher transaction via the data bus to the global visibility point prior to receiving the second acknowledgement of the given previously sent relaxed flusher transaction being globally observed by the consumers.
Clause 7. The device according to clause 1, wherein the processing circuitry is to:
   wait, prior to sending the given relaxed flusher transaction to the global visibility point at a given memory address, for a third acknowledgment of another relaxed flusher transaction being globally observed by the consumers also at the given memory address; and
   send the given relaxed flusher transaction via the data bus to the global visibility point in response to receiving the third acknowledgment.
Clause 8. The device according to clause 1, wherein the processing circuitry is to send a relaxed order transaction via the data bus to the global visibility point while any previously sent transaction has still not been globally observed by the consumers.
Clause 9. The device according to clause 8, wherein the processing circuitry is to:
   wait, prior to sending a strongly ordered transaction to the global visibility point, for at least one acknowledgment of all previously sent transactions being globally observed by the consumers; and
   send the strongly ordered transaction via the data bus to the global visibility point in response to receiving the at least one acknowledgment of all the previously sent transactions being globally observed by the consumers.
Clause 10. The device according to clause 1, wherein:
   the previously sent relaxed order transactions include data; and
   the given relaxed flusher transaction includes a flag or completion notification; and
   the previously sent strongly ordered transaction includes a flag or a completion notification.
Clause 11. The device according to clause 1, wherein the processing circuitry is to send multiple relaxed flusher transactions including corresponding completion notifications via the data bus to the global visibility point in geographical order but not chronological order.
Clause 12. The device according to clause 1, wherein the processing circuitry is to:
   operate according to a hierarchy of relaxed flusher levels;
   wait, prior to sending the given relaxed flusher transaction to the global visibility point, for at least one third acknowledgment of being globally observed by the consumers of: all previously sent relaxed flusher transactions having a lower relaxed flusher level than a relaxed flusher level of the given relaxed flusher transaction; or another previously sent relaxed flusher transaction having a same relaxed flusher level as the flusher level of the given relaxed flusher transaction and being sent to a same memory address as the given relaxed flusher transaction; and
   send the given relaxed flusher transaction via the data bus to the global visibility point in response to receiving the at least one third acknowledgement.
Clause 13. The device according to clause 12, wherein:
   the given previously sent relaxed flusher transaction has the same relaxed flusher level as, or a higher relaxed flusher level than, the relaxed flusher level of the given relaxed flusher transaction; and
   the processing circuitry is to send the given relaxed flusher transaction via the data bus to the global visibility point prior to receiving the second acknowledgement of the given previously sent relaxed flusher transaction being globally observed by the consumers.
Clause 14. The device according to clause 13, wherein:
   the given previously sent relaxed flusher transaction has the same relaxed flusher level as the given relaxed flusher transaction;
   the given previously sent relaxed flusher transaction and the given relaxed flusher transaction are being sent to different memory addresses in the global visibility point; and
   the processing circuitry is to send the given relaxed flusher transaction via the data bus to the global visibility point prior to receiving the second acknowledgement of the given previously sent relaxed flusher transaction being globally observed by the consumers.
Clause 15. The device according to clause 13, wherein the hierarchy of relaxed flusher levels corresponds to a hierarchy of a different completion notification types.
Clause 16. A device, comprising: a data bus interface to share data via a data bus with a connected device; and processing circuitry to:
   send transactions to a global visibility point of the connected device via the data bus, each transaction having a transaction type selected from one of the following: a relaxed order transaction type; a relaxed flusher transaction type; or a strongly ordered transaction type;
   send a given relaxed order transaction via the data bus to the global visibility point irrespective of a transaction type of a previously sent transaction that has not yet been globally observed by consumers; and
   send a given relaxed flusher transaction via the data bus to the global visibility point:
      in response to no previously sent relaxed order transaction awaiting to be globally observed by the consumers; and
      irrespective of a previously sent relaxed flusher transaction awaiting to be globally observed by the consumers and sent to a different memory address than the given relaxed flusher transaction.
Clause 17. The device according to clause 16, wherein the processing circuitry is to:
   send a given strongly ordered transaction via the data bus to the global visibility point in response to no previously sent transaction awaiting to be globally observed by the consumers; and
   send the given relaxed flusher transaction via the data bus to the global visibility point irrespective of a previously sent strongly ordered transaction awaiting to be globally observed by the consumers.
Clause 18. The device according to clause 16, wherein the processing circuitry is to:
   operate according to a hierarchy of relaxed flusher levels; and
   send the given relaxed flusher transaction via the data bus to the global visibility point irrespective of the previously sent relaxed flusher transaction awaiting to be globally observed by the consumers and having a same relaxed flusher level as, or a higher relaxed flusher level than, the given relaxed flusher transaction.
Clause 19. The device according to clause 18, wherein the processing circuitry is to send the given relaxed flusher transaction via the data bus to the global visibility point in response to no previously sent lower-level relaxed flusher transaction awaiting to be globally observed by the consumers, and having a lower relaxed flusher level than the given relaxed flusher transaction.
Clause 20. A method, comprising:
   receiving a network stream over a network; and
   sending a given relaxed flusher transaction via a data bus to a global visibility point of a connected device in response to:
      receiving at least one first acknowledgment of all previously sent relaxed order transactions being globally observed by consumers; and
      prior to receiving a second acknowledgement of a previously sent strongly ordered transaction or a given previously sent relaxed flusher transaction being globally observed by the consumers.

## Claims

1. A device, comprising:
a network interface to receive a network stream over a network;
a data bus interface to share data with a connected device via a data bus; and
processing circuitry to send a given relaxed flusher transaction via the data bus to a global visibility point of the connected device in response to:
receiving at least one first acknowledgment of all previously sent relaxed order transactions being globally observed by consumers; and
prior to receiving a second acknowledgement of a previously sent strongly ordered transaction or a given previously sent relaxed flusher transaction being globally observed by the consumers.

2. The device according to claim 1, wherein the processing circuitry is to wait, prior to sending the given relaxed flusher transaction to the global visibility point of the connected device via the data bus, for the at least one first acknowledgment.

3. The device according to claim 1 or 2, further comprising a network interface controller, which includes packet processing circuitry comprising the processing circuitry.

4. The device according to claim 1, 2, or 3, wherein the processing circuitry is to send the given relaxed flusher transaction, the previously sent relaxed order transactions, and the previously sent strongly order transaction using an unordered input-output protocol.

5. The device according to any of claims 1-4, wherein the processing circuitry is to send the given relaxed flusher transaction via the data bus to the global visibility point prior to receiving the second acknowledgement of the previously sent strongly ordered transaction being globally observed by the consumers.

6. The device according to any of claims 1-5, wherein the processing circuitry is to send the given relaxed flusher transaction via the data bus to the global visibility point prior to receiving the second acknowledgement of the given previously sent relaxed flusher transaction being globally observed by the consumers.

7. The device according to any of claims 1-6, wherein the processing circuitry is to:
wait, prior to sending the given relaxed flusher transaction to the global visibility point at a given memory address, for a third acknowledgment of another relaxed flusher transaction being globally observed by the consumers also at the given memory address; and
send the given relaxed flusher transaction via the data bus to the global visibility point in response to receiving the third acknowledgment.

8. The device according to any of claims 1-7, wherein the processing circuitry is to send a relaxed order transaction via the data bus to the global visibility point while any previously sent transaction has still not been globally observed by the consumers, preferably wherein the processing circuitry is to:
wait, prior to sending a strongly ordered transaction to the global visibility point, for at least one acknowledgment of all previously sent transactions being globally observed by the consumers; and
send the strongly ordered transaction via the data bus to the global visibility point in response to receiving the at least one acknowledgment of all the previously sent transactions being globally observed by the consumers.

9. The device according to any of claims 1-8, wherein:
the previously sent relaxed order transactions include data; and
the given relaxed flusher transaction includes a flag or completion notification; and
the previously sent strongly ordered transaction includes a flag or a completion notification.

10. The device according to any of claims 1-9, wherein the processing circuitry is to send multiple relaxed flusher transactions including corresponding completion notifications via the data bus to the global visibility point in geographical order but not chronological order.

11. The device according to any of claims 1-10, wherein the processing circuitry is to:
operate according to a hierarchy of relaxed flusher levels;
wait, prior to sending the given relaxed flusher transaction to the global visibility point, for at least one third acknowledgment of being globally observed by the consumers of: all previously sent relaxed flusher transactions having a lower relaxed flusher level than a relaxed flusher level of the given relaxed flusher transaction; or another previously sent relaxed flusher transaction having a same relaxed flusher level as the flusher level of the given relaxed flusher transaction and being sent to a same memory address as the given relaxed flusher transaction; and
send the given relaxed flusher transaction via the data bus to the global visibility point in response to receiving the at least one third acknowledgement, wherein:
the given previously sent relaxed flusher transaction has the same relaxed flusher level as, or a higher relaxed flusher level than, the relaxed flusher level of the given relaxed flusher transaction; and
the processing circuitry is to send the given relaxed flusher transaction via the data bus to the global visibility point prior to receiving the second acknowledgement of the given previously sent relaxed flusher transaction being globally observed by the consumers, wherein:
the given previously sent relaxed flusher transaction has the same relaxed flusher level as the given relaxed flusher transaction;
the given previously sent relaxed flusher transaction and the given relaxed flusher transaction are being sent to different memory addresses in the global visibility point; and
the processing circuitry is to send the given relaxed flusher transaction via the data bus to the global visibility point prior to receiving the second acknowledgement of the given previously sent relaxed flusher transaction being globally observed by the consumers, wherein the hierarchy of relaxed flusher levels corresponds to a hierarchy of a different completion notification types.

12. A device, comprising: a data bus interface to share data via a data bus with a connected device; and processing circuitry to:
send transactions to a global visibility point of the connected device via the data bus, each transaction having a transaction type selected from one of the following: a relaxed order transaction type; a relaxed flusher transaction type; or a strongly ordered transaction type;
send a given relaxed order transaction via the data bus to the global visibility point irrespective of a transaction type of a previously sent transaction that has not yet been globally observed by consumers; and
send a given relaxed flusher transaction via the data bus to the global visibility point:
in response to no previously sent relaxed order transaction awaiting to be globally observed by the consumers; and
irrespective of a previously sent relaxed flusher transaction awaiting to be globally observed by the consumers and sent to a different memory address than the given relaxed flusher transaction.

13. The device according to claim 12, wherein the processing circuitry is to:
send a given strongly ordered transaction via the data bus to the global visibility point in response to no previously sent transaction awaiting to be globally observed by the consumers; and
send the given relaxed flusher transaction via the data bus to the global visibility point irrespective of a previously sent strongly ordered transaction awaiting to be globally observed by the consumers.

14. The device according to claim 12 or 13, wherein the processing circuitry is to:
operate according to a hierarchy of relaxed flusher levels; and
send the given relaxed flusher transaction via the data bus to the global visibility point irrespective of the previously sent relaxed flusher transaction awaiting to be globally observed by the consumers and having a same relaxed flusher level as, or a higher relaxed flusher level than, the given relaxed flusher transaction, wherein the processing circuitry is to send the given relaxed flusher transaction via the data bus to the global visibility point in response to no previously sent lower-level relaxed flusher transaction awaiting to be globally observed by the consumers, and having a lower relaxed flusher level than the given relaxed flusher transaction.

15. A method, comprising:
receiving a network stream over a network; and
sending a given relaxed flusher transaction via a data bus to a global visibility point of a connected device in response to:
receiving at least one first acknowledgment of all previously sent relaxed order transactions being globally observed by consumers; and
prior to receiving a second acknowledgement of a previously sent strongly ordered transaction or a given previously sent relaxed flusher transaction being globally observed by the consumers.
